# EUROPEAN PATENT APPLICATION

(11) **EP 3 428 546 A1**
(43) Date of publication of application: **16.01.2019**
(21) Application number: 18175069.6
(22) Date of filing: 30.05.2018
(51) Int. Cl.: F24D 3/08, F24D 19/10, F16K 1/52, F16K 11/044, F16K 11/10

(54) **ELECTRONICALLY ADJUSTABLE BYPASS VALVE INTEGRATED INTO THE ELECTRONICALLY CONTROLLED THREE-WAY VALVE**

(30) Priority: 16.06.2017 SK 1482017 U
(71) Applicant: Vaillant GmbH, 42859 Remscheid (DE); Protherm Production s.r.o., 909 01 Skalica (SK)
(72) Inventor: Kovár, Stanislav, 90501 Senica (SK)
(74) Representative: Popp, Carsten

(57) **Abstract**

functions in the three-way valve 103, it connects the inlet 8 and the output 10, and furthermore the water is routed to the pump 105 and back to the primary heat exchanger 108.

**Industrial Applicability**

The invention is usable in heating devices, especially in hot water boilers, to prevent damage to the heating device caused either by high pressure differences in the system of radiators and their thermostats or in an emergency shutdown of the system. The desired differential pressure of the heating system is adjusted on the spring of an electronically controlled bypass valve integrated into the three-way valve and the valve thus adjusted is engaged in a system with either one or two heating circuits. The differential pressure can be electronically adjusted with the same electric drive that electronically controls the three-way valve. While the device is operating, the desired differential pressure for the heating system can be electronically adjusted by changing the preload of the spring in the bypass valve integrated into the three-way value, without needing to exchange springs physically.

Reference numerals:

1 - Elastic sealing body (movable in the axial direction of the valve spindle)
2 - Elastic sealing body (firmly fixed to the valve spindle)
3 - Stopper
4 - Spring
5 - Valve spindle
6 - Electric Drive
7 - Valve body
8 - Inlet into the electronically controlled three-way valve
9 - Inlet into the electronically controlled three-way valve
10 - Outlet out of the electronically controlled three-way valve
101 - Pressure gauge
102 - Discharge valve
103 - Electronically controlled three-way valve
104 - Safety valve
105 - Pump
106 - Vent valve
107 - Expansion vessel
108 - Primary heat exchanger
109 - Secondary heat exchanger
110 - Service water temperature sensor
120 - Flow sensor with flow restrictor
130 - Service water filter
140 - Bypass channel
HW - Heating water, the arrow indicates the direction to/from the water supply system
DHW - Service water, the arrow indicates the direction to/from the water supply system

## Description

### FIELD OF THE INVENTION

In the prior art, combined heating devices are known, especially hot water boilers, which have a heat source, circulation water pump, and one or two heating circuits, with one circuit intended for space heating and the other circuit for heated service water. In both cases, the heated water is supplied via a common primary heat exchanger and, in the case of heated service water, subsequently distributed also to a secondary heat exchanger.

A three-way valve is used to switch the supply of water to particular heating circuit and a bypass valve is used to protect the heating system against damage. The bypass valve can be implemented as a single valve or it can be integrated into a three-way valve. The invention describes an electronically adjustable bypass valve integrated into an electronically controlled three-way valve.

### BACKGROUND OF THE INVENTION

A standard three-way valve used in heating technology is an electronically controlled hydraulic component of a heating apparatus which serves to alter the flow of the heated water, based on the condition and requirements of the heating system. The three-way valve hydraulically integrates the primary heat exchanger into the space heating circuit or into the heated service water circuit.

In the prior art, standard three-way valves are controlled by an engine, and the publication DE 10340193 B4 (Vaillant) provides a detailed description of how such a valve operates, wherein a stepping motor drive can be advantegously used as a drive.

In prior art systems, a separate bypass valve is moreover used to prevent damage to the heating device caused either by high pressure differences (henceforth "differential pressures") occurring in the system of radiators and their thermostats or in an emergency shutdown of the system. The bypass valve is used for permanent water pressure equalization between the heating device inlet and outlet.

When the bypass valve is adjusted to a certain differential pressure, it means the bypass function is set up, it performs a protective function in such a manner: if the space heating suddenly closes, for example due to the poor condition of a radiator, during full operation of the heating device transferring heat exclusively to the space heating circuit, the bypass valve responds to the sudden rise in differential pressure and, in reaching the adjusted differential pressure value, releases heated water through the bypass valve. The bypass valve then discharges heated water from the primary heat exchanger inside the heating device until the heating device evaluates the situation with its own protective elements, responds and shuts off heating mode; in existing heating devices the timing is approximately five (5) seconds. The heating water release via bypass valve inside the heating device protects the primary heat exchange against potential overheating and destruction.

Since each heating system is unique, characterized by a different number of radiators, filters and other additional equipment, adjustment of the bypass valve needs to be adapted so that the heating device is able to operate as efficiently as possible.

If the bypass valve is adjusted to a lower differential pressure than is optimal, the heated water is also routed partially and not efficiently through the bypass valve and the heating device becomes less effective.

If the bypass valve is adjusted to a higher differential pressure than is desired, then the pump feeds an inordinate amount of heated water to the heating circuit, thereby creating noise that is caused by the pumping of a disproportionate amount of heated water through small diameter openings in the thermostatic valves of the radiators. Heated water is not sufficiently taken off and the heating device responds by frequently switching off the heat in order to protect the primary heat exchanger against overheating, and so the heating device becomes less effective.

The bypass valve has to be connected to the heating system through its own pipelines. An example of a bypass valve engaged in a heating device is described, for instance, in EP 1595097 B1 (Riello). Such an established solution is relatively expensive and consumes space, and boiler manufacturers are seeking to integrate the bypass function into a three-way valve, thereby significantly reducing the number of hydraulic circuit components.

When the heating device has two heating circuits and two heat exchangers, the bypass can then run through the body of the secondary heat exchanger and no additional conduit is needed for the bypass valve.

Such a bypass solution through the body of the secondary heat exchanger is described, for example in WO 2013104481 A1 (Grundfos).

Furthermore, patent documents describing a bypass valve function integrated into the three-way valve are disclosed in prior art.

WO 01/84026 A1 (Honeywell) describes a three-way valve comprising a flap fitted with a non-return valve and with a fixed spring preload setting, wherein the non-return valve is used as a bypass valve and the differential pressure cannot be switched to another value.

EP 0447851 A2 (Fugas) describes a three-way valve whose body is equipped with a membrane mechanism and has a fixed spring preload setting. The membrane provides a bypass function and cannot be switched to a differential pressure other than the one set.

Whenever the differential pressure needs to be adjusted to a value other than the preset force of the spring, then, in practice, springs have to be physically exchanged, the servicing of the boiler in the presence of a professional is required and it causes that the boiler is more expensive to operate. This disadvantage is eliminated by the presented invention, which allows the spring preload of the bypass valve integrated in the three-way valve to be adjusted electronically.

### Summary of the invention

The invention discloses the ability to adjust electronically the preload of a spring in a bypass valve integrated into an electronically controlled three-way valve, thereby eliminating the necessity of physically exchanging springs to accommodate the various differential pressure values desired in a specific heating system. For this purpose, an electric drive is used, which is connected to the three-way valve, with two inlets and one outlet and with the integrated bypass valve into the three-way valve.

The three-way valve used in heating apparatuses may be controlled by several types of electric drives.

The invention comprises the utilization of an electric drive, fitted for example with a servomotor or stepper motor, to adjust the various desired preload values for the spring in the bypass valve integrated into the three-way valve. Concurrently, the motor continues to control switching between the outlets of the three-way valve to either the space heating circuit or the heated service water circuit. In addition, there is an option for the deactivating of the bypass function by complete compression of the bypass valve spring, whereby the valve serves, in this case as a standard, as an electronically controlled three-way valve.

An electric drive fitted with a stepper motor particularly seems suitable for purposes of the presented invention. The stepper motor is a special type of a synchronous motor whose functional movement, i.e. the rotation of the shaft, is not smooth, but it is divided into the number of equally large sub-movements - steps. These motors are applied in tasks to control position and velocity, and in controlling synchronous movements. Stepper motors must be powered by a direct current source and they operate over a single electrical circuit. In normal operation, feedback is not needed to change either velocity or position.

Variously desired preload values for the spring of the bypass valve integrated into the three-way valve are adjusted by the performance of a specific number of steps in the stepper motor, whereby the existing functional relationship between the number of steps in the stepper motor, the movement of its shaft and the spring preload are utilized.

Spring preload is adjusted to the desired initial value. This value is defined at delivery of the heating device to the specific heating system. No physical exchange of the spring is necessary while the device is operating and spring preload corresponding to the desired differential pressure can be practically adjusted through a user interface to the heating device, like a boiler, via control buttons on an electronic pad or touchscreen, or other available electronic means using the aplication software.

### BRIEF DESCRIPTION OF THE DRAWINGS

The invention is further explained in drawings, but not limited to them.
Fig. 1a: Connection diagram of a three-way valve with an integrated bypass valve in a heating device comprising two heating circuits, and with two heat exchangers and a bypass channel
Fig. 1b: Connection diagram of a three-way valve with an integrated bypass valve in a heating device comprising two heating circuits, and with two heat exchangers, no bypass channel and the bypass running through the body of the secondary heat exchanger
Fig. 2: Connection diagram of a three-way valve with an integrated bypass valve in a heating device comprising one heating circuit, and with one heat exchanger.
Fig. 3: Schematic representation of a three-way valve with an integrated bypass valve.
Fig. 4: Valve in operation with heated water routed into the space heating circuit and with the bypass valve functioning, with a initialized value of differential pressure.
Fig. 5: Valve in operation with heated water routed into the secondary heat exchanger in the heated service water circuit, without the bypass valve functioning.
Fig. 6: Valve in operation with heated water routed into the space heating circuit and with the bypass valve functioning, with other than the initalized value of differential pressure.
Fig. 7: Valve with deactivated bypass function, where the valve works as a standard three-way valve.

### DETAILED DESCRIPTION OF THE PREFERRED EMBODIMENTS

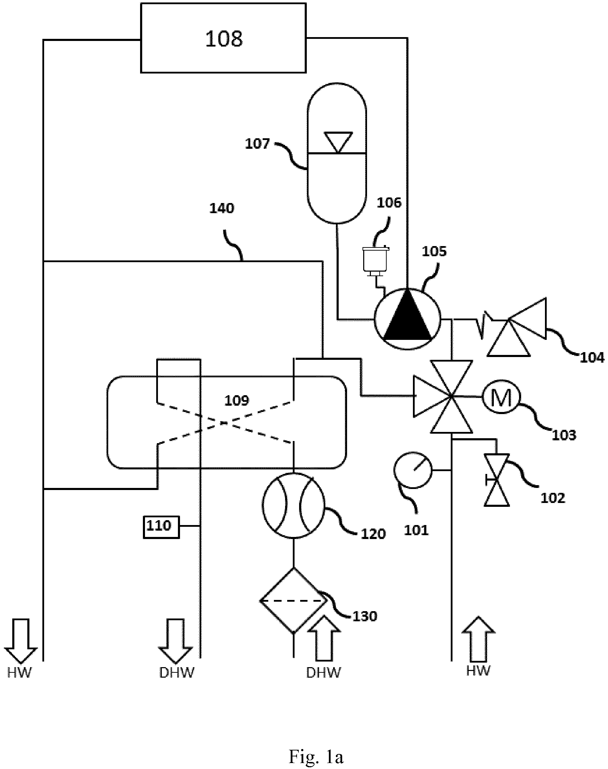

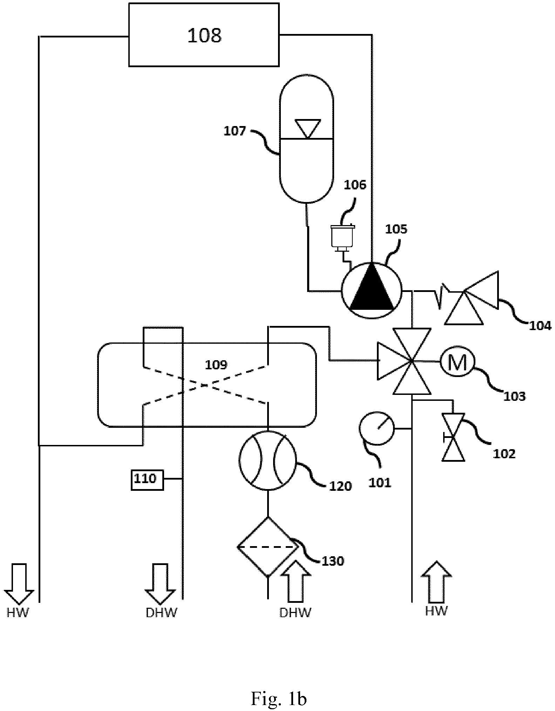

The invention is further explained with the aid of Figures 1-6, wherein the three-way valve 103, comprising a body 7 and an electric drive 6, fitted with a stepper motor, is used as a control valve. A stepper motor with a maximum linear stroke of 12 mm and a micro-step of 0.042 mm is used in this embodiment of the invention.

The three-way valve has two inlets 8 and 9 and one outlet 10. The body 7 of the three-way valve 103 is connected to the shaft of the electric drive 6 through a spindle 5. In the body 7, on the spindle 5, there is a spring 4 configured with a certain preload and its ends are clamped between two elastic sealing bodies 1 a 2 in a substantially semispherical shape. One of the sealing bodies moves freely in the axial direction of the spindle 5 (sealing body 1 in the drawings), while the other body (sealing body 2 in the drawings) is in a fixed position on the spindle 5. Thus, the integrated bypass valve is designed with a spring 4 and two elastic sealing bodies 1 and 2.

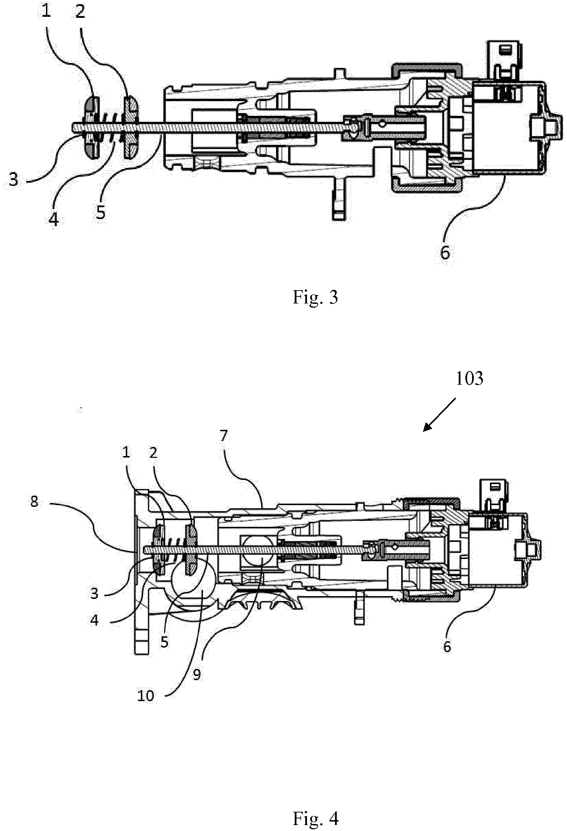

All illustrations on Figures 3-7 take such a configuration for the three-way valve 103 into account, where one elastic sealing body 2 is in a fixed position on the spindle 5, mechanically locked with stoppers, for example, and the other sealing body 1 moves in the axial direction of the spindle 5, since a stopper 3 limiting movement is positioned on only one side of the elastic body 1. It is clear that the three-way valve 103 may be configured in another manner with the integrated bypass valve, for example so that the stopper 3 is placed at the elastic body 2, the elastic sealing body 2 moves freely in the axial direction of the spindle 5 in the three-way valve 103 and the elastic sealing body 1 is in a fixed position mechanically locked by the stoppers on the spindle 5 in the three-way valve 103. Another variant embodying the invention is for the sealing bodies to be mechanically fastened to the spring, wherein the difference from the described embodiment is that the spring is only clamped between the sealing bodies.
The situation is schematically illustrated in Figure 4, with the valve 103 operating as a three-way valve. One inlet 9 is connected to the outlet 10 and the valve acts as a three-way valve, with heated water routed to the space heating circuit. The other inlet 8 is closed off by the sealing element 1. At the same time, the valve acts as a bypass valve and the spring 4 is set at the desired, initialized differential pressure.
The bypass valve functions in the following manner: When pressure rises at the outlet HW from the heating device and exceeds the maximum desired value compared to the pressure HW at the inlet to the heating device, the pressure of the water acts on the sealing element 1 and spring 4. The spring compresses at the appropriately set preload and the inlet 8 opens up in the valve. Water flows from the inlet 8 to the outlet 10.

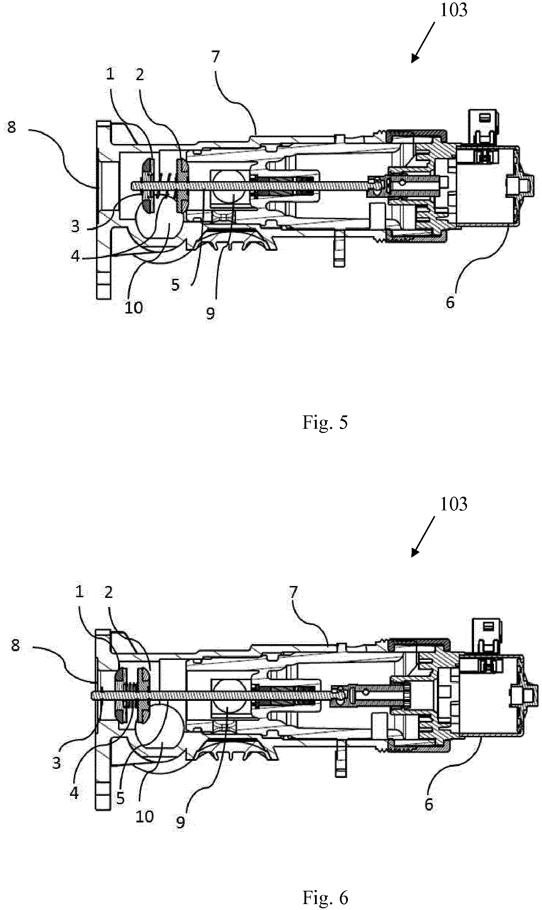

Figure 5 schematically illustrates the valve 103 operating as a three-way valve, the inlet 8 is connected to the outlet 10, the inlet 9 is closed off by the sealing element 2 and the heated water is routed to the secondary heat exchanger 109 in the heated service water circuit. The bypass valve function is not implemented because there is no need in this operating condition to protect the primary heat exchanger.
Figure 6 illustrates the valve 103 operating as a three-way valve in the same operating condition as in Figure 4, but the spring 4 has been set to a value other than the initialized value using a stepper motor and, in the illustrated case, to a higher desired differential pressure, as evidenced by the greater compression of the spring 4 in comparison to the compression of the spring 4 in Figure 4.

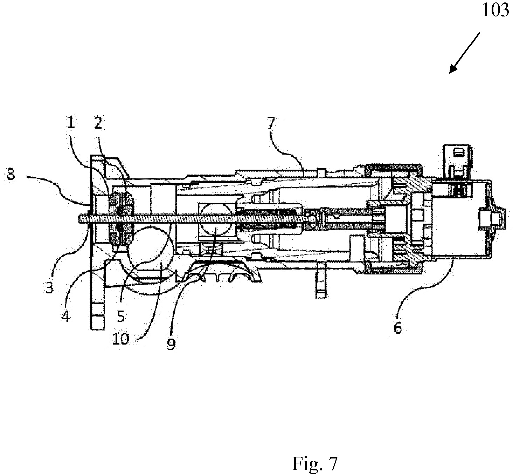

Figure 7 illustrates the bypass valve integrated into the three-way valve 103 when it is shut off. A stepper motor fully presses the spring 4 down and neither fully movable sealing elements 1 nor 2 can shift in the axial direction of the spindle 5 in the valve 103. The bypass valve cannot be used, the inlet 9 is connected to the outlet 10 into the hot water circuit and the valve 103 exclusively functions as a standard three-way valve. Such a mode of operation for the valve is the preferred use of the presented invention and is designed especially when servicing the heating device.

The invention for an electronically adjustable bypass valve integrated into an electronically controlled three-way valve, performing as described, can be used in a heating system with one or two heating circuits, with one or two heat exchangers.

Figure 1a shows the principal scheme of the heating device with two heat exchangers 108 and 109, for two heating circuits, where the heating system is equipped as standard with a pump 105, an expansion vessel 107, an air vent 106, a safety valve 104, a temperature sensor 110, a flow sensor 120, a filter 130, a manometer 101, a discharge valve 102 and a bypass channel 140. The electronically controlled bypass valve integrated into the three-way valve 103 is engaged in the heating system. The bypass channel 140 circulates water so that the water heated in the heat exchanger 108 will not flow back into the system through the outlet HW, but would be instead routed through the bypass channel 140 into the three-way valve 103 at its inlet 8. When the bypass functions in the three-way valve 103, it connects the inlet 8 and the output 10, and furthermore the water is routed to the pump 105 and back to the primary heat exchanger 108.

Figure 1b shows the principal scheme of the heating device with two heat exchangers 108 and 109, for two heating circuits, where the heating system is equipped as standard with a pump 105, an expansion vessel 107, an air vent 106, a safety valve 104, a temperature sensor 110, a flow sensor 120, a filter 130, a manometer 101 and a discharge valve 102. The electronically controlled bypass valve integrated into the three-way valve 103 is engaged in the heating system. The bypass channel runs through the body of the secondary heat exchanger 109. Internal circulation is provided in the functioning of the bypass so that the water heated in the heat exchanger 108 will not flow back into the system through the outlet HW, but would be instead routed through the heat exchanger 109 into the three-way valve 103 at its inlet 8. When the bypass functions in the three-way valve 103, it connects the inlet 8 and the output 10, and furthermore the water is routed to the pump 105 and back to the primary heat exchanger 108.

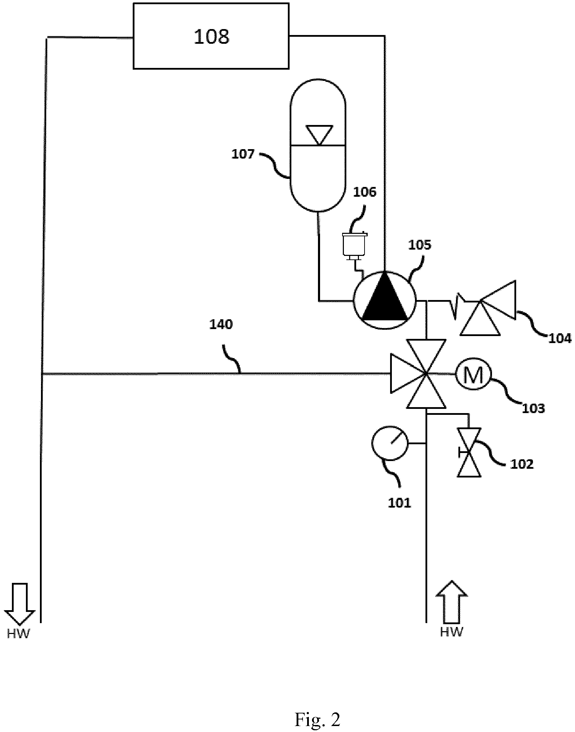

Fig. 2 illustrates the principal scheme of a heating device with one heat exchanger 108 for one heating circuit. The electronically controlled bypass valve integrated into the three-way valve 103 is engaged in the heating system. The heating system is equipped as standard with a pump 105, an expansion vessel 107, an air vent 106, a safety valve 104, a manometer 101 and a discharge valve 102. The bypass channel directly connects the heat exchanger 108 to the three-way valve 103, more specifically to its inlet 8, through the bypass channel 140. When the bypass functions in the three-way valve 103, it connects the inlet 8 and the output 10, and furthermore the water is routed to the pump 105 and back to the primary heat exchanger 108.

### Industrial Applicability

The invention is usable in heating devices, especially in hot water boilers, to prevent damage to the heating device caused either by high pressure differences in the system of radiators and their thermostats or in an emergency shutdown of the system. The desired differential pressure of the heating system is adjusted on the spring of an electronically controlled bypass valve integrated into the three-way valve and the valve thus adjusted is engaged in a system with either one or two heating circuits. The differential pressure can be electronically adjusted with the same electric drive that electronically controls the three-way valve. While the device is operating, the desired differential pressure for the heating system can be electronically adjusted by changing the preload of the spring in the bypass valve integrated into the three-way value, without needing to exchange springs physically.

### Reference numerals:

1 - Elastic sealing body (movable in the axial direction of the valve spindle)
2 - Elastic sealing body (firmly fixed to the valve spindle)
3 - Stopper
4 - Spring
5 - Valve spindle
6 - Electric Drive
7 - Valve body
8 - Inlet into the electronically controlled three-way valve
9 - Inlet into the electronically controlled three-way valve
10 - Outlet out of the electronically controlled three-way valve
101 - Pressure gauge
102 - Discharge valve
103 - Electronically controlled three-way valve
104 - Safety valve
105 - Pump
106 - Vent valve
107 - Expansion vessel
108 - Primary heat exchanger
109 - Secondary heat exchanger
110 - Service water temperature sensor
120 - Flow sensor with flow restrictor
130 - Service water filter
140 - Bypass channel
HW - Heating water, the arrow indicates the direction to/from the water supply system
DHW - Service water, the arrow indicates the direction to/from the water supply system

## Claims

1. An electronically adjustable bypass valve integrated into an electronically controlled three-way valve (103) with two inlets (8, 9) and one outlet (10), engaged in a heating device comprising a circulation pump (105), wherein the heating device has one or two heating circuits and a primary heat exchanger (108) is engaged for space heating circuit and a secondary heat exchanger (109) is engaged for heated service water circuit, and the three-way electronically controlled valve (103) is assembled from a body (7) and spindle (5), whereon the spindle (5) is configured with a spring (4), the ends of which are clamped between two elastic sealing bodies (1, 2) in a substantially semispherical shape, placed on the spindle (5) so one of the elastic sealing bodies (1, 2), placed at either end of the spring (4), is firmly attached to the spindle (5) and the other flexible sealing body (1, 2), placed at the other end of the spring (4), moves freely in the axial direction of the valve spindle (5),
**characterized in that**
there is an electric drive (6) with a linear stroke attached to the valve (103) to adjust the preload on the spring (4).

2. The electronically adjustable bypass valve integrated into the electronically controlled three-way valve (103) of claim 1,
**characterized in that**
it comprises the spring (4) in the fully compressed state to deactivate the bypass function.

3. The electronically adjustable bypass valve integrated into the electronically controlled three-way valve (103) of anyone of the claim 1 or claim 2,
**characterized in that**
the electric drive (6) is fitted with a stepper motor.
